# EUROPÄISCHE PATENTANMELDUNG

(11) **EP 3 176 566 A1**
(43) Veröffentlichungstag der Anmeldung: **07.06.2017**
(21) Anmeldenummer: 15197723.8
(22) Anmeldetag: 03.12.2015
(51) Int. Cl.: G01N 21/64, G01N 21/77, G01N 21/85, G01N 21/15

(54) **OPTISCHER SENSOR ZUR MESSUNG GELÖSTER GASE**

(71) Anmelder: Mettler-Toledo GmbH, 8606 Greifensee (CH)
(72) Erfinder: Lettow, Robert, 8049 Zürich (CH); Ulmer, Lilya, 8932 Mettmenstetten (CH); Rosa, Riccardo, 5621 Zufikon (CH)
(74) Vertreter: Mettler-Toledo

(57) **Zusammenfassung**

Optischer Sensor (100, 400) zur Messung mindestens eines gelösten Gases in einem Messmedium und dessen Herstellung, wobei der Sensor einen Sensorkopf (102); ein Schaftelement (106) mit einer Aussparung (110) für ein sensitives Element (108, 408); und einen zylinderförmigen Sensorschaft (104) umfasst, der zwischen dem Sensorkopf (102) und dem Schaftelement (106, 206) angeordnet ist. Das Schaftelement (106, 206) zeichnet sich durch eine hydrophile Aussenfläche (118, 218) aus, die auch durch eine dem Grad der Hydrophilie entsprechende Oberflächenrauigkeit und durch einen Kontaktwinkel gekennzeichnet ist. Das Schaftelement besteht vorzugsweise aus Edelstahl.

## Beschreibung

Die Erfindung bezieht sich auf die Ausgestaltung und Herstellung eines optischen Sensors zur Messung mindestens eines in einem Messmedium gelösten Gases.

Optische Sensoren basieren darauf, dass eine chemische Reaktion zwischen dem Sensormaterial und einem Analyten, hier mindestens ein gelöstes Gas, im Messmedium zu einer Veränderung der optischen Eigenschaften des Sensors führt. Eine Veränderung der optischen Eigenschaften kann beispielsweise in einer Änderung der Absorptions- bzw. der Fluoreszenzeigenschaften eines im Sensor angeordneten sensitiven Elements liegen, sodass die Reaktion in der Folge durch spektroskopische Methoden nachweisbar wird und so der Analytgehalt, zum Beispiel als Konzentration oder Partialdruck, im Messmedium bestimmt werden kann.

Optische Sensoren werden beispielsweise zur Messung von im Messmedium gelösten Gasen wie Sauerstoff, Ozon und/oder Kohlendioxid eingesetzt, um die Gaskonzentration im Messmedium bestimmen, welche für gelöste Gase als Partialdruck angegeben wird. Bei Einsätzen in biologischen oder biotechnischen Umgebungen und/oder Prozessen hat sich gezeigt, dass durch das Einbringen von gasförmigen Analyten in den Prozess mittels eines als Sparger bekannten Gasverteilers Gasblasen entstehen, welche sich aussen am Sensor und somit auch am sensitiven Element anlagern. Dies führt dann bei einer Messung dazu, dass die Konzentration des Analyten in den anhaftenden Gasblasen und nicht diejenige im Messmedium von einem optischen Sensor gemessen wird. Die Gasblasen im Messmedium führen so zu Fehlmessungen, Messspitzen und/oder können sogar zu einer Überbelastung des optischen Sensors und/oder einer Alarmmeldung führen, wenn der optische Sensor beispielsweise auf die Messung geringer Stoffkonzentration eines im Messmedium gelösten Gases ausgelegt ist und nicht auf die Messung des viel höher konzentrierten Gases in den angelagerten Gasblasen.

Gasförmige Analyte, wie insbesondere Sauerstoff, werden mit einem Sparger beispielsweise in Fermentationsprozesse eingebracht, um höhere Zellkulturen zu züchten und so die Ausbeute zu erhöhen. Als Sparger werden Gasverteiler unterschiedlicher Geometrien bezeichnet, die zur Einbringung von Gasen in Prozessumgebungen oder Reaktionsbehälter verwendet werden. Der Sparger ist häufig am Boden des Reaktionsbehälters, in der Nähe des Rührwerks oder als Einheit mit dem Rührwerk, angeordnet. Sensoren hingegen können an verschiedenen Stellen des Reaktionsbehälters eingebaut sein. Gängige Einbaupositionen von Sensoren sind unter anderem von oben durch die Deckel- oder Abschlussplatte des Reaktionsbehälters oder von der Seite durch die Wand des Reaktorbehälters hindurch. Ein Sensor wird dabei häufig über einem am Reaktionsbehälter befindlichen Flansch in denselben eingebracht, wobei der Sensor je nach Ausgestaltung direkt oder im Inneren einer sogenannten Sensor-Armatur in den Reaktionsbehälter eingebracht wird. Durch den Sparger werden zum Beispiel in Fall des Fermenters Sauerstoffblasen in das darin befindliche wässrige Messmedium eingebracht und mit Hilfe des Rührwerks im gesamten Fermenter, genauer dem Messmedium darin, verteilt. Diese Gasblasen können unterschiedliche Grössen aufweisen und lagern sich wie bereits erwähnt aussen am optischen Sensor und/oder am sensitiven Element an und verursachen Messspitzen, Fehlmessungen und/oder sogar Überbelastungen.

Aufgabe der Erfindung ist es daher die Bereitstellung eines optischen Sensors zur Messung gelöster Gase in einem Messmedium, welcher eine Anlagerung von Gasblasen und damit Fehlmessung und Messspitzen weitgehend verhindert.

Gelöst wird diese Aufgabe durch einen optischen Sensor zur Messung mindestens eines gelösten Gases in einem Messmedium. Der optische Sensor umfasst einen Sensorkopf, ein Schaftelement mit einer Aussparung für ein sensitives Element und einen zylinderförmigen Sensorschaft, der zwischen dem Sensorkopf und dem Schaftelement angeordnet ist. Das Schaftelement zeichnet sich dabei insbesondere durch eine hydrophile Aussenfläche aus.

Vorteilhaft an einem erfindungsgemässen optischen Sensor ist, dass die Gasblasen sich an der hydrophilen Aussenfläche nicht anlagern können und/oder abperlen. Auf diese Weise kann die Messleistung des optischen Sensors insbesondere bei der Messung von in einem wässrigen Messmedium gelösten Gasen erheblich verbessert werden.

In einer beispielhaften Ausgestaltung umfasst das Schaftelement zudem eine abgeschrägte Endfläche in welcher die Aussparung für das sensitive Element angeordnet ist. Die hydrophile Aussenfläche des Schaftelements umfasst dabei zumindest die abgeschrägte Endfläche.

Die Ausgestaltung mit einer abgeschrägten Endfläche ist vorteilhaft, da die Gasblasen durch die Abschrägung von der Endfläche abgelenkt werden und eine mögliche Anlagerung bereits aufgrund der geometrischen Gegebenheiten verhindert wird. Vorzugsweise umfasst die hydrophile Aussenfläche zudem zumindest die Teile der äusseren Oberfläche des Schaftelements, welche sich im Betrieb in Kontakt mit dem Messmedium befinden, insbesondere die abgeschrägte Endfläche, in welcher die Aussparung für das sensitive Element angeordnet ist, welches sich im Betrieb in direktem Kontakt mit dem Messmedium befindet. Da das Schaftelement vorzugsweise austauschbar ist, bietet es sich produktionstechnisch an die komplette Oberfläche des Schaftelements als hydrophile Aussenfläche auszugestalten.

In einer beispielhaften Ausgestaltung weist die hydrophile Aussenfläche des Schaftelements eine Oberflächenrauigkeit von *Ra* ≤ 1 *µm* und vorzugsweise von *Ra ≤* 0.4 *µm* auf. Die Oberflächenrauigkeit kann beispielsweise mit einem HOMMEL-ETAMIC T1000 der Firma Jenoptic gemäss den gültigen DIN/ISO Standards bestimmt werden. Die Oberflächenrauigkeit kann dabei als Mittenrauwert *R*α in [µm] oder als Rauheitsklasse ausgedrückt werden. Vorzugsweise weist die hydrophile Aussenfläche eine Oberflächenrauigkeit von maximal *Ra* ≤ 1 *µm* bzw. besser als Rauheitsklasse N7 auf und insbesondere von *Ra* ≤ 0,4 *µm* bzw. besser als Rauheitsklasse N5 auf.

Die Oberflächenrauigkeit der hydrophilen Aussenfläche beeinflusst auch deren Kontaktwinkel θ. In einer weiteren Ausgestaltung weist die hydrophile Aussenfläche des Schaftelements einen Kontaktwinkel von θ ≤ 60°, vorzugsweise zwischen θ ≥ 40° und θ ≤ 55° und insbesondere zwischen θ ≥ 45° und θ ≤ 50° auf.

In einer weiteren Ausgestaltung weist die hydrophile Aussenfläche des Schaftelements einen Kontaktwinkel θ von θ ≤ 60°, vorzugsweise zwischenθ ≥ 10° und θ ≤ 20° und insbesondere zwischen θ ≥ 12° und θ ≤ 17° auf.

Der Kontaktwinkel θ, welcher beispielsweise mit einem Kontaktwinkel-Goniometer gemessen werden kann, gibt den Winkel zwischen einer festen Oberfläche und einer sich auf der Oberfläche befindlichen Flüssigkeit, wie beispielsweise Wasser an. Der Kontaktwinkel θ hängt dabei von der Wechselwirkung zwischen Flüssigkeit und Feststoff an der Berührungsgrenze ab und gibt den Benetzungsgrad der Oberfläche mit der jeweiligen Flüssigkeit an. Eine hydrophobe Oberfläche weisst einen hohen Kontaktwinkel zu Wasser auf, so dass Wasser von einer hydrophoben Oberfläche abperlt. Eine hydrophile Oberfläche hingegen weisst einen kleinen Kontaktwinkel auf, so das Wasser diese Oberfläche benetzt ohne das sich zum Beispiel definierte Tropfen bilden. Thomas Young definierte 1805 den Kontaktwinkel θ von gasumgebenen Flüssigkeiten auf einer festen Oberfläche als den Winkel an der Phasengrenze der gasförmigen, flüssigen und festen Phasen als *γ_{SG} = γ_{SL}* + *γ_{LG} cosθ* mit *γ_{SG}* als Grenzflächenspannung zwischen fest und gasförmig, *γ_{SL}* als Grenzflächenspannung zwischen fest und flüssig, und *γ_{LG}* als Grenzflächenspannung zwischen flüssig und gasförmig.

Die abgeschrägte Endfläche des Schaftelements kann einen Winkel α zwischen 25 und 45 Grad und vorzugsweise von ca. 30 Grad aufweisen. Ein optischer Sensor mit einem Schaftelement mit einer derartigen abgeschrägten Endfläche ist vorteilhaft, da sich Gasblasen so einerseits gar nicht erst an der abgeschrägten Endfläche anlagern können und die abgeschrägte Endfläche andererseits nicht zu steil ist, da es sich empirisch gezeigt hat, dass eine stärkere Abschrägung auf Grund des vergrösserten Abstands zwischen dem sensitiven Element und einer zumindest teilweise im Sensorschaft angeordneten Messanordnung zu einem deutlichen Signalverlust führt.

Das Schaftelement besteht vorzugsweise aus einem Metall und insbesondere aus Edelstahl. Das Schaftelement kann dabei als zylinderförmiger Hohlkörper mit einer abgeschrägten Endfläche ausgestaltet sein. Wobei die abgeschrägte Endfläche am proximalen Ende des Schaftelements angeordnet ist und das distale Ende des Schaftelements so ausgestaltet ist, dass es mit dem Sensorschaft verbunden werden kann. Das Schaftelement kann fest oder lösbar mit dem Sensorschaft verbunden werden, wobei eine lösbare Verbindung, wie beispielsweise eine Schraub-, Klemm- oder Bayonet-Verbindung bevorzugt ist.

Die Begriffe "distal" und "proximal" werden hier im Sinne von im Betrieb vom Messmedium entfernt (distal) und im Betrieb dem Messmediums zugewandt (proximal) verwendet, das distale Ende des Schaftelements ist somit im Betrieb oder in der Betriebslage des Sensors dem Messmedium abgewandt und dessen proximales Ende dem Messmedium zugewandt.

In einer weiteren Ausgestaltung umfasst der optische Sensor ferner ein sensitives Element, das im Schaftelement angeordnet ist und im Betrieb des optischen Sensors in Kontakt mit dem Messmedium steht. Das sensitive Element, auch Sensor-Spot genannt, umfasst beispielsweise ein Fluorophor, welches auf das mindestens eine zu messende gelöste Gas im Messmedium sensitiv ist und in einem Träger verteilt ist. Der Träger kann beispielweise als Polymerscheibe ausgestaltet sein. Ist ein Fluorophor beispielsweise Sauerstoff sensitiv, so ändert sich bei Kontakt mit Sauerstoff dessen Fluoreszenzspektrum, aus dem dann die Sauerstoffkonzentration im Messmedium bestimmt werden kann.

In einer beispielhaften Ausgestaltung umfasst der optische Sensor ferner eine Messanordnung, die optische und elektronische Komponenten zur Messung des mindestens einen gelösten Gases im Messmedium umfasst und im Sensorkopf und im Sensorschaft angeordnet ist. Diese Messanordnung umfasst unter anderem eine Lichtquelle, einen Lichtleiter, eine Detektor sowie elektronische Komponenten zur Ansteuerung und Auslesung dieser optischen Komponenten. Das Messprinzip des optischen Sensors basiert, sehr stark vereinfacht dargestellt, darauf, dass von der Lichtquelle ausgesandtes Licht durch den Lichtleiter zum sensitiven Element mit Schaftelement geleitet wird und dort mit dem Fluorphor wechselwirkt. Nach Wechselwirkung mit dem Flurophor, welcher im mit dem Messmedium in Kontakt stehenden sensitiven Element angeordnet ist, wird das Fluoreszenzsignal durch den Lichtleiter zum Detektor geleitet. Der Lichtleiter kann dabei mindestens eine Faser, mehrere Fasern oder ein Faserbündel umfassen.

Ein Verfahren zur Herstellung eines erfindungsgemässen optischen Sensors zur Messung mindestens eines gelösten Gases in einem Messmedium, welcher einen Sensorkopf, ein Schaftelement mit einer Aussparung für ein sensitives Element und einen zylinderförmigen Sensorschaft, welcher zwischen dem Sensorkopf und dem Schaftelement angeordnet ist umfasst, kann die folgenden Schritte umfassen: Herstellen eines Schaftelements; und Erzeugen einer hydrophilen Aussenfläche auf dem Schaftelement.

Die hydrophile Aussenfläche des Schaftelements kann durch eines der nachfolgenden Verfahren erzeugt werden: Sandstrahlen, chemisches Ätzen, Bürsten und/oder Schleifen.

In einer beispielhaften Ausgestaltung umfasst die Herstellung des Schaftelements zudem die Erzeugung einer abgeschrägten Endfläche, in welcher die Aussparung für das sensitive Element angeordnet ist. Die hydrophile Aussenfläche wird zumindest auf der abgeschrägten Endfläche und vorzugsweise auf allen Aussenflächen des Schaftelements erzeugt, welche im Betrieb mit dem Messmedium in Kontakt stehen.

In einer beispielhaften Ausgestaltung besteht das Schaftelement im Wesentlichen aus einem Metall und insbesondere aus einem Edelstahl. Die Oberfläche dieser Materialien können durch mechanische oder chemische Prozesse so bearbeitet werden, dass eine hydrophile Aussenfläche mit definierten Oberflächenparametern resultiert.

In einer weiteren Ausgestaltung wird die hydrophile Aussenfläche mit einer Oberflächenrauigkeit von *Ra* ≤ 1 *µm* und vorzugweise von *Ra* ≤ 0,4 *µm* erzeugt. Die Oberflächenrauigkeit *Ra* kann beispielsweise mit einem HOMMEL-ETAMIC T1000 der Firma Jenoptic gemäss den gültigen DIN/ISO Standards bestimmt werden. Die Oberflächenrauigkeit kann dabei als Mittenrauwert *Ra* in [µm] oder als Rauheitsklasse N ausgedrückt werden. Vorzugsweise wird die hydrophile Aussenfläche mit einer Oberflächenrauigkeit von maximal *Ra* ≤ 1 *µm* bzw. weniger als N7 und insbesondere mit *Ra* ≤ 0,4 *µm* bzw. weniger als N5 erzeugt.

Die Oberflächenrauigkeit der hydrophilen Aussenfläche beeinflusst auch den Kontaktwinkel θ der hydrophilen Aussenfläche. In einer weiteren Ausgestaltung wird die hydrophile Aussenfläche des Schaftelements mit einem Kontaktwinkel von θ ≤ 60°, vorzugsweise zwischen θ ≥ 40° und θ ≤ 55° und insbesondere zwischen θ ≥ 45° und θ ≤ 50° erzeugt.

In einer weiteren Ausgestaltung weist die hydrophile Aussenfläche des Schaftelements einen Kontaktwinkel θ von θ ≤ 60°, vorzugsweise zwischenθ ≥ 10° und θ ≤ 20° und insbesondere zwischen θ ≥ 12° und θ ≤ 17° auf.

Ein chemischer Ätzprozess mit dem die hydrophile Aussenfläche mit definierten Oberflächenparametern erzeugt werden kann, umfasst beispielsweise das Einbringen eines polierten Schaftelements in Salzsäure als Ätz-Reagenz mit einer Konzentration von [*HCl*] = 1 *Mom*/*L* für ca. 24 h. Auch andere Säuren, wie beispielweise Salpetersäure oder Königswasser, können als Ätz-Reagenz eingesetzt werden.

Mechanisch kann auf dem Schaftelement zum Beispiel durch einen Sandstrahlprozess eine hydrophile Aussenfläche erzeugt werden. Dazu wird das Schaftelement mit einer Aussenfläche, welche spitzenlos rundgeschliffen bzw. centerless-geschliffen wurde, als weitere Oberflächenbehandlung mit Korund geschliffen. Je nach Korngrösse des eingesetzten Korunds können so hydrophile Aussenflächen mit unterschiedlichen Oberflächenparametern erzeugt werden, wie es in der nachfolgenden Tabelle exemplarisch für ein Schaftelement aus Edelstahl dargestellt ist:

| **Korund** | | **Hydrophile Aussenfläche** | |
|---|---|---|---|
| **F-Zahl** | **Korngrösse [*µm*]** | **Rauheit** | **Rauheit in Ra [*µm*]** |
| 180 | 55 - 90 | N6 | 0.9 |
| 220 | 45 - 75 | N6 | 0.75 |
| 280 | 30 - 40 | N6 | 0.5 |
| 320 | 20 - 30 | N6 | 0.45 |
| 400 | 17.3 | N5 | 0.35 |
| 500 | 10 - 20 | N5 | 0.3 |

Dazu wird das Schafelement bei einem Druck von 6,0 bar für ca. 1 min von Innen und Aussen bei einer Strahldistanz von ca. 70-80 mm zwischen der Düse und dem Aussendurchmesser des Schaftelements, bzw. einer Strahldistanz von ca. 15 mm zwischen der Düse und dem Grund des Innendurchmessers, mit Korund der entsprechenden Korngrösse behandelt. Die resultierende Oberflächenrauigkeit wird wie bereits beschrieben mit einem HUMMEL-ETAMIC T1000 der Firma Jenoptik bestimmt.

Im Folgenden werden anhand der Figuren verschiedene Ausführungsbeispiele eines erfindungsgemässen Schaftelements für einen optischen Sensors näher beschrieben, wobei gleiche Elemente mit gleichen oder ähnlichen Bezugszeichen versehen sind. Die Figuren zeigen:
- Fig. 1: eine Explosionsdarstellung eines erfindungsgemässen optischen Sensor;
- Fig. 2: eine dreidimensionale Darstellung eines Schaftelements eines erfindungsgemässen optischen Sensors;
- Fig. 3: einen Schnitt durch ein Schaftelement eines erfindungsgemässen optischen Sensors;
- Fig. 4: eine schematische Darstellung eines Reaktionsbehälters mit Rührwerk, Sparger und einem erfindungsgemässen optischen Sensors;
- Fig. 5: einen Vergleich der Messkurven eines herkömmlichen optischen Sensors und eines erfindungsgemässen optischen Sensors.

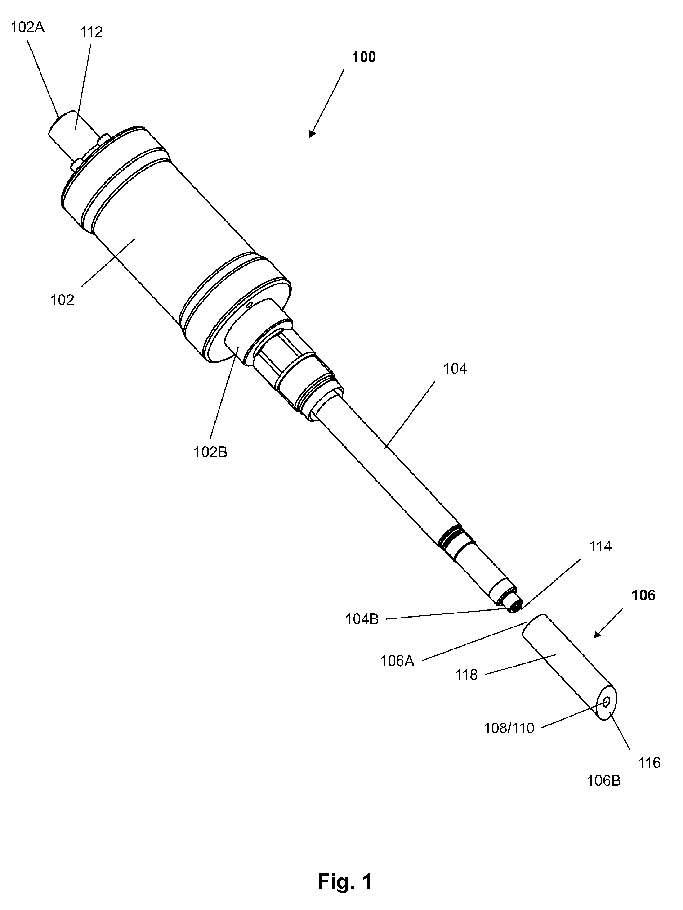

Figur 1 zeigt eine Explosionsdarstellung eines erfindungsgemässen optischen Sensors 100. Der Sensor 100 umfasst einen Sensorkopf 102, einen Sensorschaft 104 und ein Schaftelement 106. Der Sensorkopf 102 weist einen Anschluss 112 auf, um den Sensor 100 mit einem Transmitter, einer Prozessleitstelle oder einen anderen übergeordneten Anzeige- und/oder Auswerteeinheit zu verbinden. Der Sensorkopf 102 ist proximal mit einem zylinderförmigen Sensorschaft 104 verbunden. Die Begriffe "distal" und "proximal" werden hier im Sinne von im Betrieb vom Messmedium entfernt (distal) und im Betrieb in der Nähe des Messmediums befindlich (proximal) verwendet. Das distale Ende 102A des Sensorkopfes 102 ist somit im Betrieb oder in der Betriebslage des Sensors dem Messmedium abgewandt und das proximale Ende 102B des Sensorkopfes 102 dem Messmedium zugewandt. Die Länge des Sensorschafts 104 kann bei der Herstellung in Abhängigkeit des Einsatzgebiets sowie der gewünschten Eintauchtiefe des Sensors 100 angepasst werden. Kommerziell erhältlich sind optische Sensoren mit Gesamt-Schaftlängen von ca. 120 mm bis ca. 600 mm. Das Schaftelement 106 wird endständig am Sensorschaft 104, bzw. am proximalen Ende des Sensorschafts 104 befestigt. Diese Befestigung ist lösbar, so dass das Schaftelement 106 ausgetauscht werden kann. Das Schaftelement 106 kann zum Beispiel durch Einrasten, Schrauben oder einen Bajonett-Verschluss, um nur einige Möglichkeiten zu nennen, lösbar am Sensorschaft 104 befestigt werden.

Weiterhin umfasst der optische Sensor 100 eine Messanordnung (hier nicht im Detail gezeigt) mit optischen und elektronischen Komponenten, welche im Wesentlichen im Sensorkopf 102 und im Sensorschaft 104 angeordnet sind. Diese Komponenten umfassen unter anderem eine Lichtquelle, einen Lichtleiter 114, welcher im Sensorschaft 104 angeordnet ist und zumindest bis zum proximalen Ende 104B des Sensorschafts 104 reicht. Zudem umfassen diese Komponenten Mittel zur Umwandlung der optischen Signale in elektronische Signale und Steuerkomponenten zur Ansteuerung dieser Komponenten.

Das freie Ende des Lichtleiters 114 liegt im zusammengesetzten Zustand des Sensors 100 dicht hinter oder sogar direkt am sensitiven Element 108, welches im Betrieb des Sensors durch eine Aussparung 110 im Schaftteil 106 mit einem Messmedium in Kontakt steht. Im Betrieb wird Licht von der Lichtquelle durch den Lichtleiter 114 zum sensitiven Element 108 und nach Wechselwirkung mit einem im sensitiven Element angeordneten Fluorophor zum Detektor geleitet. Der Fluorophor reagiert mit einem im vorzugsweise wässrigen Messmedium gelösten Analyten, insbesondere einem gelösten Gas, und sendet nach Wechselwirkung mit dem eingebrachten Licht eine Fluoreszenzsignal aus, welches vom Detektor erfasst wird. Anhand des Fluoreszenzsignals oder eines erfassten Fluoreszenzspektrums kann dann die Analyt-Konzentration im Messmedium bestimmt werden.

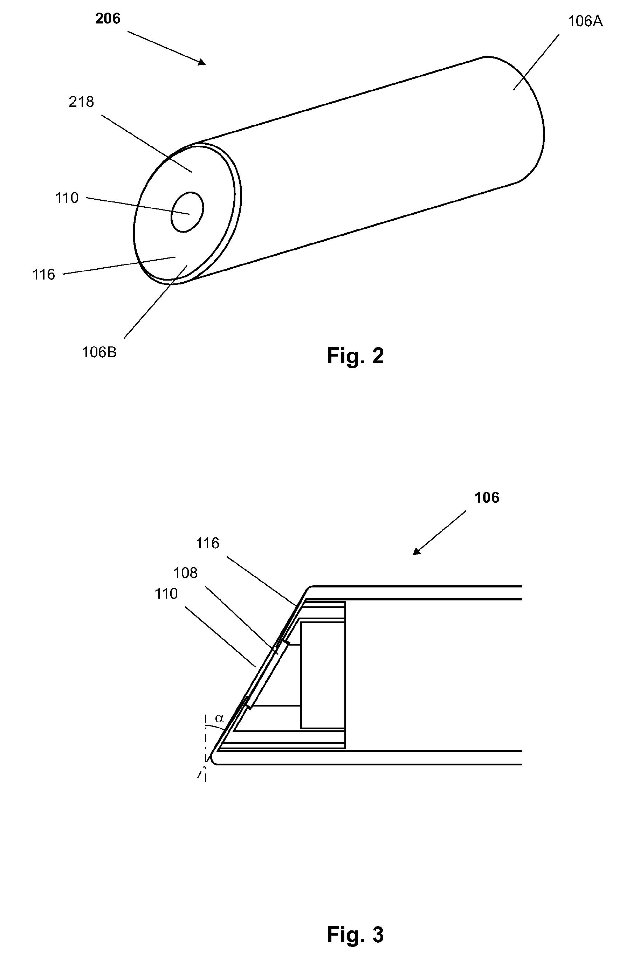

Das Schaftelement 106 weist eine abgeschrägte Endfläche 116 auf, in welcher eine Aussparung 110 für ein sensitives Element 108 ausgebildet ist. Die hier gezeigt abgeschrägte Endfläche 116 hat vorzugsweise einen Winkel α von ca. 30 Grad (s. Figur 3). Die Abschrägung der Endfläche 116 wurde so gewählt, dass eine Anlagerung von Gasblasen bereits auf Grund der Geometrie des Sensorelements vermieden oder zumindest reduziert wird und dass die Endfläche 116 andererseits eine möglichst geringe Schräge aufweist, um nicht unnötig optisches Signal zu verlieren, was sonst auf Grund der Kombination des Lichtleiters 114 und der in der abgeschrägten Fläche 116 angeordneten sensitiven Elements 108 auftreten kann.

Weiterhin umfasst das Schaftelement 106 eine hydrophile Aussenfläche 118, welche zumindest die abgeschrägt Endfläche 116 mit der Aussparung 110 für das sensitive Element 108 umfasst. Das Schaftelement 106 ist vorzugsweise ein zylinderförmiger Hohlkörper aus einem Metall und insbesondere aus Edelstahl. Die hydrophile Aussenfläche 116 des Schaftelements 106 wird durch eine der nachfolgenden Oberflächenbehandlungen erzeugt: chemische Ätzprozesse, Sandstrahlen, Bürsten oder Schleifen. Vorzugsweise wird die Oberflächenbehandlung derart kontrolliert, dass eine hydrophile Aussenfläche 118 mit definierten Kontaktwinkel und/oder einer definierten Oberflächenrauigkeit *Ra* entsteht. Nach der Behandlung hat die hydrophile Aussenfläche 118 einen Kontaktwinkel θ von weniger als θ ≤ 60°. Je nach Einsatzgebiet des Sensors wird die hydrophile Aussenfläche 118 mit einem Kontaktwinkel zwischen θ ≤ 40° und θ ≤ 55° und insbesondere zwischen θ ≤ 45° und θ ≤ 50° oder zwischen θ ≤ 10° und θ ≤ 20°, insbesondere zwischen θ ≤ 12° und θ ≤ 17° erzeugt. Die hydrophile Aussenfläche weist nach der Oberflächenbehandlung eine Oberflächenrauigkeit von *Ra* ≤ 1 *µm* bzw. besser als N7 und insbesondere eine Oberflächenrauigkeit von *Ra* ≤ 0,4 *µm* bzw. besser als N5 auf.

Die Figuren 2 und 3 zeigen ein Schaftelement 106, 206 eines erfindungsgemässen optischen Sensors als dreidimensionale Darstellung und im Schnitt. Das Schaftelement 106 weist eine hydrophile Aussenfläche 118, 218 und eine abgeschrägten Endfläche 116 mit einer Aussparung 110 für ein sensitives Element 108 auf. Das in Figur 2 gezeigte Schaftelement 206 umfasst eine hydrophile Aussenfläche 218, welche nur die abgeschrägte Endfläche 116 umfasst.

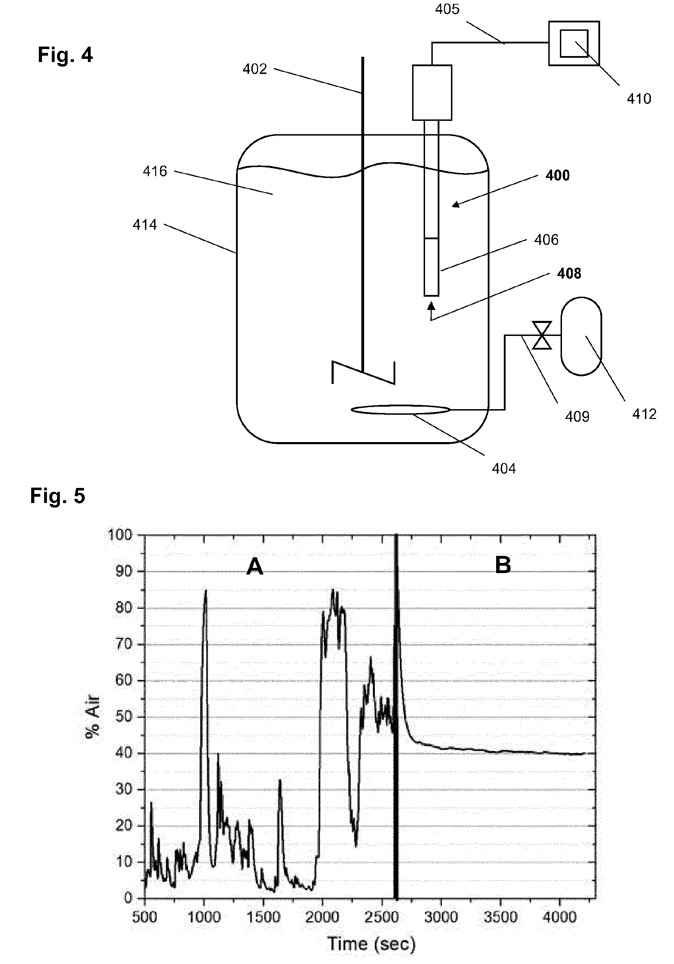

Das sensitive Element 108 ist so im Schaftelement 106, 206 angeordnet, dass es im Betrieb des Sensors mit einem Messmedium 416 in Kontakt treten kann (s. Figur 4). Das Schaftelement 106, 206 ist im Wesentlichen ein zylinderförmiger Hohlkörper, welcher über das dem Sensorkopf 102 abgewandte Ende des Sensorschafts 104 geschoben und an diesem lösbar befestigt wird. Das Schaftelement 106, 206 ist austauschbar, da das darin angeordnete sensitive Element 108, welches ein Fluorophor umfasst, einem Alterungsprozess unterliegt und ausgetauscht werden kann, wenn die Messleistung nicht mehr ausreichend ist.

Figur 4 zeigt schematisch einem Reaktionsbehälter 414 mit eingebautem Rührwerk 402, Sparger 404 und einem erfindungsgemässen optischen Sensor 400. Im Reaktionsbehälter 414 ist ein Messmedium 416 angeordnet. Der Sensor 400 ist hier über ein Kabel 405 mit einer übergeordneten Auswerte- und/oder Anzeigeneinheit 410 verbunden. Der Sparger 404 ist über eine Leitung 409 mit Ventil mit einem Gasreservoir 412 verbunden, so dass Gasblasen in den Reaktionsbehälter 414 eingebracht und mit dem Rührwerk 402 gleichmässig verteilt werden können. Der in Figur 4 gezeigte optische Sensor 400 umfasst hier ein Schaftelement 406 mit einer hydrophilen Aussenfläche und einer geraden Endfläche, in welcher sich endständig eine Aussparung für ein sensitives Element 408 befindet.

Figur 5 zeigt einen Vergleich einer Messkurve A eines herkömmlichen optischen Sensors und einer Messkurve B eines erfindungsgemässen optischen Sensors. Die Messkurven wurden mit einer vereinfachten Anordnung gemäss Figur 4 aufgenommen. Als Reaktionsbehälter 416 wurde ein Becherglas mit Wasser als Messmedium 416 gefüllt, mittels eines Spargers 404 sowohl Sauerstoff als auch Stickstoff in das Becherglas eingeleitet und mittels eines Rührwerks 402 im Wasser verteilt. Zunächst wurde ein herkömmlicher Sensor mit gerade Endfläche und polierter Oberfläche eingesetzt und der Sauerstoffgehalt in %Air gemessen. Auffällig am ersten Teil der Messkurve A ist die Vielzahl von Spikes, die das Messergebnis dominieren und verfälschen. Nach ca. 2600 Sekunden wurde unter laufender Messung der herkömmliche optische Sensor gegen einen erfindungsgemässen optischen Sensor 100 mit hydrophiler Aussenfläche und abgeschrägter Endfläche ausgetauscht. Der zweite Teil der Messkurve B zeigt zwar einen Verschiebung der Konzentration als Sprung in der Basislinie, da der erfindungsgemässe optische Sensor ohne Kalibrierung verwendet wurde, jedoch ist die Messkurve B im Wesentlich konstant und glatt und zeichnet sich insbesondere durch das Fehlen der die Messkurve A dominierenden Spikes aus.

Somit konnte gezeigt werden, das durch den Einsatz eines erfindungsgemässen optischen Sensors 100 mit einem Schaftelement 106 mit hydrophiler Aussenfläche 118 und abgeschrägter Endfläche 116 Messspitzen und Fehlmessungen vermieden werden können und insgesamt eine stabileres Messergebnis erreicht werden konnte.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere können neben den angeführten Prozessen der Oberflächenbehandlung weitere für Metall oder Edelstahl geeignete Prozesse zur Erzeugung einer hydrophilen Aussenfläche eingesetzt werden. Der Kontaktwinkel und/oder die Rauigkeit der hydrophilen Aussenfläche kann zudem an die Prozessbedingungen angepasst werden, wie beispielsweise dem eingesetzten Sparger-Gas, der Bläschengrösse und/oder dem Messmedium. Weiterhin kann die Abschrägung der Endfläche variiert werden, um das Schaftelement und somit den optischen Sensor optimal an die Bedingungen in einem Reaktionsbehälter anzupassen.

### Liste der Bezugszeichen

- 100, 400: Optischer Sensor
- 102: Sensorkopf
- 102A: Distales Ende des Sensorkopfes 102
- 102B: Proximales Ende des Sensorkopfes 102
- 104: Sensorschaft
- 104B: Proximales Ende des Sensorschafts 104
- 106, 206, 406: Schaftelement
- 106A: Distales Ende des Schaftelements 106
- 106B: Proximales Ende des Schaftelements 106
- 108, 408: Sensitives Element
- 110: Aussparung im Schaftelement 106
- 112: Anschluss
- 114: Lichtleiter
- 116: Abgeschrägte Endfläche
- 118, 218: Hydrophile Aussenfläche
- 402: Rührwerk
- 404: Sparger
- 405: Leitung
- 409: Leitung
- 410: Auswerte- und/oder Anzeigeeinheit
- 412: Gasreservoir
- 414: Reaktionsbehälter
- 416: Messmedium

## Patentansprüche

1. Optischer Sensor (100, 400) zur Messung mindestens eines gelösten Gases in einem Messmedium umfassend
einen Sensorkopf (102);
ein Schaftelement (106, 206, 406) mit einer Aussparung (110) für ein sensitives Element (108, 408) ; und
einen zylinderförmigen Sensorschaft (104), der zwischen dem Sensorkopf (102) und dem Schaftelement (106, 206, 406) angeordnet ist;
**dadurch gekennzeichnet, dass** das Schaftelement (106, 206, 406) eine hydrophile Aussenfläche (118, 218) umfasst.

2. Optischer Sensor nach Anspruch 1, **dadurch gekennzeichnet, dass** das Schaftelement (106, 206) eine abgeschrägte Endfläche (116) umfasst, in welcher die Aussparung (110) für das sensitive Element (108) angeordnet ist, und dass die hydrophile Aussenfläche (218) des Schaftelements (206) zumindest die abgeschrägte Endfläche (116) umfasst.

3. Optischer Sensor nach Anspruch 2, **dadurch gekennzeichnet, dass** die abgeschrägte Endfläche (116) des Schaftelements (106, 206) einen Winkel zwischen 25 und 45 Grad und vorzugsweise von ca. 30 Grad aufweist.

4. Optischer Sensor nach einem der Ansprüche 1 bis 3, **dadurch gekennzeichnet, dass** die hydrophile Aussenfläche (118, 218) des Schaftelements (106, 206, 406) eine Oberflächenrauigkeit von *Ra* ≤ 1 *µm* und insbesondere von *Ra* ≤ 0,4 *µm* aufweist.

5. Optischer Sensor nach einem der Ansprüche 1 bis 4, **dadurch gekennzeichnet, dass** die hydrophile Aussenfläche (118, 218) des Schaftelements (106, 206, 406) einen Kontaktwinkel *θ ≤* 60°, vorzugsweise zwischen *θ* ≥ 40° und *θ* ≤ 55° und insbesondere zwischen *θ* ≥ 45° und *θ* ≤ 50°, aufweist.

6. Optischer Sensor nach einem der Ansprüche 1 bis 4, **dadurch gekennzeichnet, dass** die hydrophile Aussenfläche (118, 218) des Schaftelements (106, 206, 406) einen Kontaktwinkel *θ* ≤ 60°, vorzugsweise zwischenθ ≥ 10° und *θ* ≤ 20° und insbesondere zwischen *θ* ≥ 12° und *θ* ≤ 17°, aufweist.

7. Optischer Sensor nach einem der Ansprüche 1 bis 6, **dadurch gekennzeichnet, dass** der Schaftelement (106, 206, 406) aus einem Metall, vorzugsweise Edelstahl, besteht.

8. Optischer Sensor nach einem der Ansprüche 1 bis 7, **dadurch gekennzeichnet, dass** dieser ferner ein sensitives Element (108, 408) umfasst, das in einer Aussparung (110) im Schaftelement (106, 206, 406) angeordnet ist und im Betrieb des optischen Sensors in Kontakt mit dem Messmedium (416) steht.

9. Optischer Sensor nach einem der Ansprüche 1 bis 8, **dadurch gekennzeichnet, dass** dieser ferner eine Messanordnung umfasst, die optische und elektronische Komponenten zur Messung des mindestens einen gelösten Gases umfasst und im Sensorkopf (102) und im Sensorschaft (104) angeordnet ist.

10. Verfahren zur Herstellung eines optischen Sensors (100) zur Messung mindestens eines gelösten Gases in einem Messmedium gemäss einem der vorangehenden Ansprüche, wobei der optische Sensor (100, 400)
einen Sensorkopf (102);
ein Schaftelement (106, 206, 406) mit einer Aussparung (116) für ein sensitives Element (108, 408); und
einen zylinderförmigen Sensorschaft (104), welcher zwischen dem Sensorkopf (102) und dem Schaftelement (106, 206, 406) angeordnet ist;
wobei das Verfahren folgende Schritte umfasst:
Herstellen eines Schaftelements (106, 206, 406) mit einer Aussparung (110) für ein sensitives Element (108, 408) umfasst; und
Erzeugen einer hydrophilen Aussenfläche (118, 218) auf dem Schaftelement (106).

11. Verfahren nach Anspruch 10, **dadurch gekennzeichnet, dass** die hydrophile Aussenfläche (118, 218) des Schaftelements (106, 206) durch Sandstrahlen, chemisches Ätzen und/oder Schleifen erzeugt wird.

12. Verfahren nach einem der Ansprüche 10 oder 11, **dadurch gekennzeichnet, dass** das Herstellen des Schaftelements (106, 206) ferner die Ausgestaltung einet abgeschrägten Endfläche (116) mit einen Winkel zwischen 25 und 45 Grad und vorzugsweise von ca. 30 Grad umfasst.

13. Verfahren nach einem der Ansprüche 10 bis 12, **dadurch gekennzeichnet, dass** die hydrophile Aussenfläche (118, 218) des Schaftelements (106, 206), welche zumindest die abgeschrägte Endfläche (116) umfasst, mit einer Oberflächenrauigkeit von *Ra* ≤ 1 *µm* und insbesondere von *Ra* ≤ 0,4 *µm* erzeugt wird.

14. Verfahren nach einem der Ansprüche 10 bis 13, **dadurch gekennzeichnet, dass** die hydrophile Aussenfläche (118, 218) des Schaftelements (106, 206, 406) mit einem Kontaktwinkel θ ≤ 60°, vorzugsweise zwischen θ ≥ 40° und θ ≤ 55° und insbesondere zwischen θ ≥ 45° und θ ≤ 50°, erzeugt wird.

15. Verfahren nach einem der Ansprüche 10 bis 13, **dadurch gekennzeichnet, dass** die hydrophile Aussenfläche (118, 218) des Schaftelements (106, 206, 406) mit einem Kontaktwinkel θ ≤ 60°, vorzugsweise zwischen θ ≥ 10° und θ ≤ 20° und insbesondere zwischen θ ≥ 12° und θ ≤ 17°, erzeugt wird.
